# EUROPÄISCHE PATENTANMELDUNG

(11) **EP 2 561 743 A1**
(43) Veröffentlichungstag der Anmeldung: **27.02.2013**
(21) Anmeldenummer: 12401171.9
(22) Anmeldetag: 20.08.2012
(51) Int. Cl.: A01C 7/08

(54) **Pneumatische Einzelkornsämaschine**

(30) Priorität: 25.08.2011 DE 102011052971
(71) Anmelder: Amazonen-Werke H. Dreyer GmbH & Co. KG, 49205 Hasbergen (DE)
(72) Erfinder: Bruns, Oliver, 26655 Westerstede (DE); Brüggemann, Klaus, 27777 Ganderkesee (DE); Oltmanns, Bernd, 26676 Harkenbrügge (DE); Steen, Rüdiger, 27798 Hude (DE)

(57) **Zusammenfassung**

Pneumatische Einzelkornsämaschine mit einem einen Saatgutvorratsbehälter aufweisenden Gehäuse und zumindest einer drehbar angetriebenen Vereinzelungstrommel (2), in deren Umfangsmantel (3) kreisförmig in Perforationsreihen (5) angeordnete Perforationen (5) angebracht sind, einem Gebläse, mittels welchem eine Druckdifferenz zwischen dem Innenraum der Vereinzelungstrommel (2) und dem Außenbereich der Vereinzelungstrommel (2) erzeugbar ist, so dass, wenn die Vereinzelungstrommel durch den Saatgutvorrat geführt wird, sich an den Perforationen auf der Außenseite der perforierten Trommel Samenkörner anlagern, wobei das Gehäuse zwei voneinander beabstandete Seitenwände (11) aufweist, die sich parallel zur Bewegungsrichtung der Trommel erstrecken und mit der Trommel zumindest annähernd abdichtend zusammenwirken, wobei eine die an die Perforationen angelegte Druckdifferenz zum Ablösen der Saatkörner von den Perforationen unterbrechende Abdeckeinrichtung im Innenraum der Trommel angeordnet ist, wobei im Bereich der Abdeckeinrichtung und den Perforationsreihen jeweils das eine Ende einer Ausbringleitung mit ihrer Einmündungsöffnung (17) bis an die Trommeloberfläche zumindest annähernd heranreichend angeordnet ist, wobei die Einmündungsöffnungen der Ausbringleitungen und die zugeordneten Abdeckeinrichtungen im auf die Drehrichtung bezogenen aufsteigenden Rotationsbereich des Vereinzelungsbereiches der Trommel angeordnet sind, wobei zumindest einigen Ausbringleitungen (18) durch motorisch Antriebsmittel betätigbare klappenartige Absperrmittel (24) zugeordnet sind, wobei Absperrmittel (24) im Bereich der Eingangsöffnungen der Ausbringleitungen angeordnet sind. Um in einfacher Weise sicherzustellen, dass die Absperrmittel (24) die Ausbringleitung bei zuverlässiger Funktionsweise ausreichend luftdicht abschließen, ist vorgesehen, dass die Absperrmittel (24) als zumindest teilweise aus einem elastischen Material bestehende Absperrklappen ausgebildet sind, dass die klappenartigen Absperrmittel (24) zumindest zwei verschiedene Steifigkeitsbereiche aufweisen, dass zumindest ein Teilbereich des die Eingangsöffnung abdeckenden Bereiches des klappenartigen Absperrmittels steifer als der übrige Bereich des klappenartigen Absperrmittels ausgebildet ist.

## Beschreibung

Die Erfindung betrifft eine pneumatische Einzelkornsämaschine gemäß des Oberbegriffes des Patentanspruches 1.

Eine derartige pneumatische Einzelkornsämaschine ist durch die DE 10 2009 043 914 A1 bekannt. Bei dieser Einzelkornsämaschine lassen sich zumindest einige der Einmündungsöffnungen durch motorisch betätigbare Absperrmittel verschließen. Somit lässt sich beispielsweise eine Fahrgassenschaltung oder eine Arbeitsbreitenreduzierung verwirklichen. Die vereinzelten Saatkörner werden dann nicht den Ausbringleitungen zugeleitet sondern in den Saatgutvorrat zurückgeführt.

Wenn die Absperrmittel die Eingangsöffnungen nicht ausreichend luftdicht verschließen, können die Saatkörner, welche in den Saatgutvorrat zurückgeführt werden sollen, im Spaltbereich zwischen der Einmündungsöffnung unter dem Absperrmittel anhaften, weil Luft aus dem Vorratsbehälterbereich in die Ausbringleitung durch den Spalt zwischen der Einmündungsöffnung der Ausbringleitung und dem Absperrmittel entweicht.

Der Erfindung liegt die Aufgabe zu Grunde, in einfacher Weise sicherzustellen, dass die Absperrmittel die Ausbringleitung bei zuverlässiger Funktionsweise ausreichend luftdicht abschließen.

Diese Aufgabe wird erfindungsgemäß dadurch gelöst, dass die Absperrmittel als zumindest teilweise aus einem elastischen Material bestehende Absperrklappen ausgebildet sind, dass die klappenartigen Absperrmittel zumindest zwei verschiedene Steifigkeitsbereiche aufweisen, dass zumindest ein Teilbereich des die Eingangsöffnung abdeckenden Bereiches des klappenartigen Absperrmittels steifer als der übrige Bereich des klappenartigen Absperrmittels ausgebildet ist.

Durch den möglichst luftdichten Abschluss der Einmündungsöffnungen besteht zunächst nicht mehr die Gefahr, dass Saatkörner im Spaltbereich zwischen Eingangsöffnung und Absperrmittel bei Absperrung der entsprechenden Ausbringleitung anhaften. Durch die ausreichende Steifigkeit des Absperrmittels zumindest in Teilbereichen seines die Einmündungsöffnung abdeckenden Bereiches wird sichergestellt, dass das Absperrmittel auch bei entsprechend auftretenden Luftdrücken nicht in unzulässiger Weise in die Einmündungsöffnung hineingedrückt werden kann. Ein verklemmen der Absperrmittel in der jeweiligen Einmündungsöffnung wird verhindert.

In einfacher Weise lässt sich eine ausreichende luftdichte Absperrung der Ausbringleitung durch die Absperrmittel dadurch erreichen, dass die Absperrmittel als zumindest teilweise aus einem elastischen Material bestehende Absperrklappen ausgebildet sind. Hierdurch können sich die aus einem elastischen Material bestehenden Absperrklappen in ausreichend angepasster Weise gegen den Eingangsbereich der Eingangsöffnungen legen, um die jeweilige Ausbringleitung ausreichend luftdicht abzusperren.

Ein ausreichend dichtes Anliegen der Absperrklappen an den Endbereich der Ausbringleitung in deren Einmündungsöffnungsbereich lässt sich in einfacher Weise dadurch erreichen, dass die Absperrklappen gegenüber den Eingangsöffnungen der jeweiligen Ausbringleitung beweglich angeordnet sind.

Eine ausreichende Beweglichkeit der Absperrklappen gegenüber den Einmündungsöffnungen der Ausbringleitung lässt sich dadurch erreichen, dass der bewegliche Bereich zwischen der Befestigungsstelle der Absperrklappen an dem jeweiligen motorischen Antriebsmittel und dem Abdeckbereich der Absperrklappen zur Abdeckung der Eingangsöffnungen aus einem flexiblen Material bestehen.

Diese ausreichende Beweglichkeit lässt sich in einer anderen Ausführungsform dadurch erreichen, dass der bewegliche Bereich zwischen der Befestigungsstelle der Absperrklappe an dem motorischen Antriebsmittel und dem Abdeckbereich der Absperrklappe zur Abdeckung der Eingangsöffnung als Gelenk ausgebildet ist.

Der steifere Bereich der Absperrklappen lässt sich in einfacher Weise dadurch verwirklichen, dass der steifere Bereich durch ein Verstärkungsmaterial gebildet ist. Hierdurch ist der steifere Bereich in einfacher Weise in die Abwehrklappe zu integrieren

In einer Ausgestaltung der Erfindung ist zur Schaffung des steifere Bereiches der Absperrklappen vorgesehen, dass der steifere Bereich der aus einem elastischen und/oder flexiblen Material bestehenden Absperrklappe durch ein steifes Einlagematerial zumindest in einem Teilbereich des die Eingangsöffnung abdeckenden Bereiches der Absperrklappen gebildet ist.

In einer anderen Ausführungsform ist vorgesehen, dass das Einlagematerial eine Metalleinlage ist.

In einer weiteren Ausführungsform ist vorgesehen, dass das Einlagematerial eine Gewebeeinlage ist.

Um in einfacher Weise der steifere Bereich der Abwehrklappe ausgestalten zu können, dass die aus einem Verstärkungsmaterial bestehenden Verstärkungsmittel auf die aus einem flexiblen Material bestehende Absperrklappen befestigt, insbesondere aufgeklebt ist.

Weitere Einzelheiten der Erfindung sind der Beispielsbeschreibung und den Zeichnungen zu entnehmen. Hierbei zeigen
- Fig. 1: das Vereinzelungsgehäuse mit der Vereinzelungstrommel und der Vereinzelungsvorrichtung, ohne seitliche Lagerungselemente der Vereinzelungstrommel und ohne Saatgutvorratsbehälter der Einzelkornsämaschine in perspektivischer Ansicht,
- Fig. 2: das Vereinzelungsgehäuse mit der Vereinzelungstrommel gemäß Fig. 1 in Seitenansicht,
- Fig. 3: ein Teilbereich des Vereinzelungsgehäuses mit dem Ablöse- und Übergabebereich der Saatkörner von der Trommel in die Einmündungsöffnungen der Ausbringleitungen in vergrößertem Maßstab und perspektivischer Ansicht, wobei die Einmündungsöffnung durch die Klappen der Absperrmittel in Öffnungsstellung dargestellt sind,
- Fig. 4: ein Teilbereich des Vereinzelungsgehäuses mit dem Ablöse- und Übergabebereich der Saatkörner von der Trommel in die Einmündungsöffnung der Ausbringleitungen in vergrößertem Maßstab und perspektivischer Ansicht gemäß Fig. 3, wobei die Einmündungsöffnung durch die Klappe der Absperrmittel in Absperrstellung dargestellt sind,
- Fig.5: eine Absperrklappe in Absperrstellung in der Ansicht V - V,
- Fig.6: eine anders ausgestaltete Absperrklappe in Absperrstellung in der Ansicht V - V,
- Fig.7: eine weitere anders ausgestaltete Absperrklappe in Absperrstellung in der Ansicht V - V und
- Fig.8: eine weitere anders ausgestaltete Absperrklappe in Absperrstellung in der Ansicht V - V.

Die Einzelkornsämaschine weist das Vereinzelungsgehäuse 1 mit der darin drehbar gelagerten und angetriebenen Vereinzelungstrommel 2, auf. Über eine nicht dargestellte Antriebsvorrichtung wird die Vereinzelungstrommel 2 in Rotation versetzt. Oberhalb der Vereinzelungstrommel 2 ist ein nicht dargestellter Vorratsbehälter angeordnet. In den Umfangsmantel 3 der Vereinzelungstrommel 2 sind kreisförmig in Perforationsreihen 4 angeordnete Perforationen 5 angebracht. Der Vorratsbehälter und das Vereinzelungsgehäuse 1 werden auf der Vereinzelungsseite 6 der Trommel 2 mit einem Überdruck beaufschlagt. Somit entsteht eine Druckdifferenz zwischen dem Innenraum 7 der Vereinzelungstrommel 2 und dem Außenbereich 6 der Vereinzelungstrommel 2 in deren Vereinzelungsbereich 8. Die Druckdifferenz wird durch ein nicht dargestelltes Gebläse erzeugt. Das Gebläse ist über den Anschlussstutzen 9 an das Vereinzelungsgehäuse mittels einer Luftleitung angeschlossen. Wenn die Vereinzelungstrommel 2 durch den Saatgutvorrat, der sich zumindest in dem unteren Bereich der Vereinzelungstrommel 2 in dem Vereinzelungsgehäuse 1 befindet, geführt wird, lagern sich an der Perforationen auf der Außenseite 6 der perforierten Trommel 2 Samenkörner an. Die Seitenwände 11 des Vereinzelungsgehäuses 1 erstrecken sich parallel zur Bewegungsrichtung 12 der Trommel 1 und wirken zumindest annähernd abdichtend mit der Trommel 1 zusammen.

Des Weiteren ist der Trommel 2 eine die an die Perforationen 5 angelegte Druckdifferenz zum Ablösen der Samenkörner von den Perforationen 5 unterbrechende Abdeckeinrichtung 13 im Innenraum 7 der Trommel 2 angeordnet. Diese Abdeckeinrichtung 13 weist auf einer am Vereinzelungsgehäuse 1 angeordneten Welle 14 drehbar gelagerte walzenartige Elemente 15 auf.

Im Vereinzelungsbereich 8 der Trommel 2 ist zwischen dem Saatgutvorratsbereich 10 und dem Bereich, dem die Abdeckeinrichtung 13 zugeordnet ist, eine Abstreifereinrichtung 16 angeordnet, um Doppelbelegungen an den Perforationen 5 zu vermeiden.

Weiterhin weist die Einzelkornsämaschine bis an die Trommeloberfläche der Trommel 2 heranreichende, mit Einmündungsöffnungen 17 versehene Ausbringleitungen 18 auf, welche zu Ausbringelementen, wie beispielsweise Säscharen, führen. Mittels dieser Ausbringleitungen 18 sind die von der Vereinzelungstrommel 2 vereinzelten Saatkörner den Ausbringelementen mittels eines Luftstromes über die Ausbringleitungen 18 zuführbar. Hierbei reicht jeweils das eine Ende der Ausbringleitungen 18 mit ihrer jeweiligen Einmündungsöffnung 17 bis an die Trommeloberfläche der Trommel 2 heran, um so eine sichere Übergabe des vereinzelten Saatkornes über die jeweilige Einmündungsöffnung 17 in die jeweilige Ausbringleitung 18 zu gewährleisten. An die Verbindungsstücke der Ausbringleitungen 18 sind Ausbringverlängerungsleitungen, die die Ausbringleitungen bis zu den Ausbringelementen verlängern, anzuschließen.

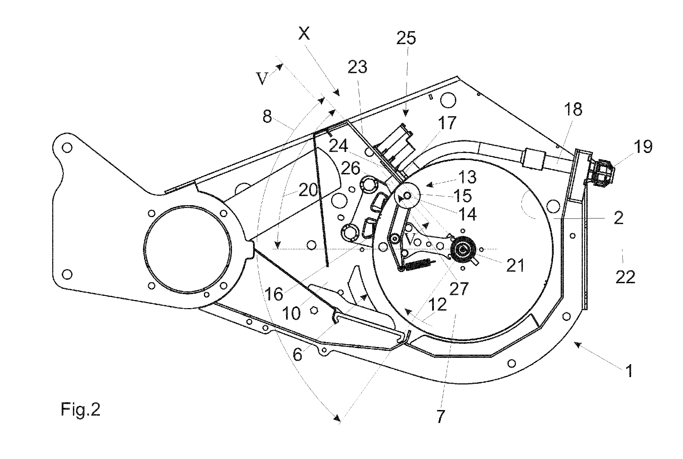

Die Einmündungsöffnungen 17 der Ausbringleitungen 18 und die zugeordneten Abdeckeinrichtungen 13 sind, insbesondere wie die Fig. 2 zeigt, im auf die Drehrichtung 12 der Trommel 2 bezogenen aufsteigenden Rotationsbereich des Vereinzelungsbereiches 8 der Trommel 2 angeordnet. Hierbei sind die Eingangsöffnungen 17 und die zugeordneten Abdeckmittel 15 der Abdeckeinrichtung 13 in einem Bereich angeordnet, der in einem Winkelbereich 20 zwischen 0° und 60°, im Ausführungsbeispiel von etwa 45°, zu einer durch die Trommeldrehachse 21 gezogenen Horizontalen 22 liegt.

Die im Bereich der Ausbringleitungen 18 liegende Wand 23 des Vereinzelungsgehäuses 1 ist im Bereich der Eingangsöffnungen 17 der Ausbringleitungen 18 angeordnet.

Den Ausbringleitungen 18 sind im Bereich der Einmündungsöffnungen 17 als verschwenkbare klappenartige Absperrmittel, die als Klappen 24 ausgestaltet sind, ausgebildete Absperrmittel 25 angeordnet, um die jeweilige Eingangsöffnung 17 der Ausbringleitungen 18 absperren zu können.

Weiterhin sind an der im Bereich der Ausbringleitungen 18 angeordneten Wand 23 des Vereinzelungsgehäuses 1 im Bereich der Einmündungsöffnungen 17 Trennwände 26 angeordnet. Diese Trennwände 26 sind im Übergabebereich 27 der vereinzelten Saatkörner von der Trommel 2 in die Ausbringleitungen 18 zwischen den einzelnen Perforationsreihen 4 angebracht. Hierbei reicht die Unterseite der Trennwände 26 zumindest annähernd bis an die Oberfläche der Trommel 2 heran. Weiterhin sind die Trennwände 26 zumindest annähernd bis in den Bereich, in welchem die Saatkörner durch die Abdeckeinrichtung 13 von den Perforationen 4 durch die Unterbrechung der Druckdifferenz abgelöst werden, reichend angeordnet.

Wenn einzelnen Ausbringleitungen 18, d.h. einzelnen Ausbringelementen zur Reduzierung der Arbeitsbreite oder zum Anlegen von Fahrgassen keine Saatkörner zugeleitet werden sollen, werden über eine vorzugsweise elektronische Steuereinrichtung ansteuerbare Betätigungseinrichtungen für die Klappen 24 der Absperrmittel 25 betätigt.

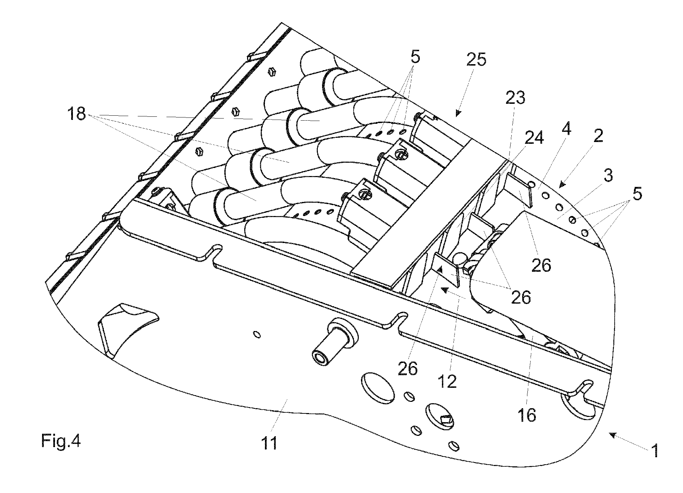

Wenn die Klappen 24 der Absperrmittel 25 die Einmündungsöffnungen 17 der Ausbringleitungen 18 verschließen, wie Fig. 4 dargestellt ist, können die Saatkörner nicht mehr über die Einmündungsöffnungen 17 in die Ausbringleitungen 18 gelangen und fallen aufgrund der Schwerkraft entlang der Trommeloberfläche der Trommel 2 seitlich der Perforationsreihen 4 in den Saatgutvorratsbereich 10 zurück.

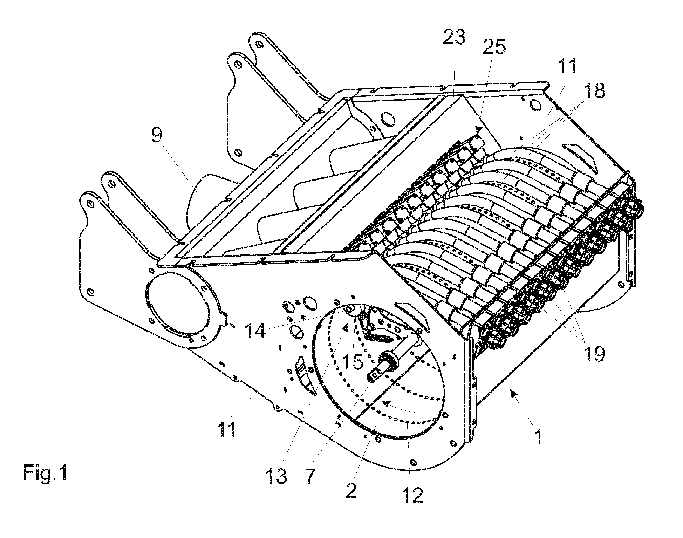

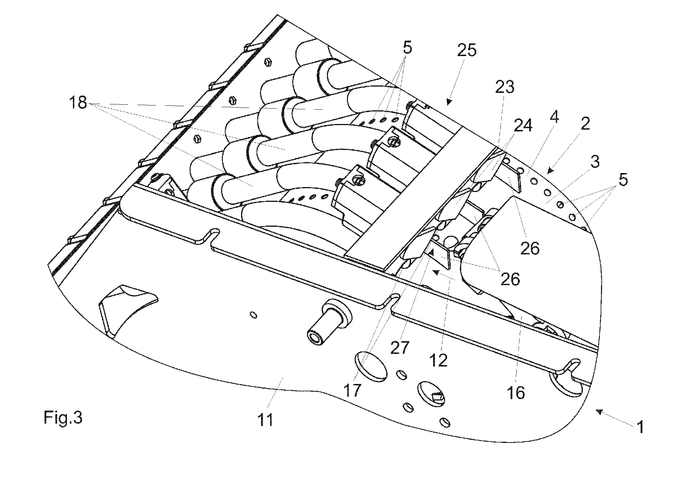

Die Klappen 24 der Absperrmittel 25 gemäß den Fig. 1 - 5 bestehen aus einem flexiblen Material. Aufgrund der Ausbildung, dass die Klappen 24 aus einem flexiblen Material bestehen, können sie sich abdichtend vor die Eingangsöffnungen 17 anlegen und diese luftdicht verschließen. Die zumindest teilweise aus einem flexiblen Material bestehenden Klappen 24 sind somit auch in der Lage Fertigungsungenauigkeiten zu überbrücken und/oder auszugleichen. Die Absperrklappe 24 weist die beiden verschiedenen Steifigkeitsbereiche 27 und 28 auf. Der obere Bereich 27 ist flexibel ausgebildet, während der untere Bereich 28 steifer als der übrige Bereich der Klappe 24 in dem Bereich der Eingangsöffnung 17, die abzudecken ist. Der steifere Bereich 28 wird durch ein Verstärkungsmaterial erreicht, welches als Einlagematerial in die Klappe 24 integrierter Weise angeordnet ist. Dieses Einlagematerial kann eine Metalleinlage oder eine Gewebeeinlage sein. Die Einlage ist also wie ein Inlay in dem Material der Klappe 24 angeordnet. Damit die Klappe sich durch Ausgleich von Fertigungstoleranzen abdichtend vor die Eingangsöffnung 17 legen kann ist die Klappe beweglich an dem jeweiligen motorischen Antriebsmittel angeordnet. Hierzu weist sie den beweglichen Bereich, der durch den flexiblen Bereich 27 gebildet wird, auf. Somit ist die Absperrklappe 24 beweglich gegenüber der Eingangsöffnung 17 angeordnet. Durch den steifen Bereich 28 wird verhindert, dass das untere Ende der Klappe 24 durch den Luftdruck in die Eingangsöffnung 17 gedrückt werden kann.

Auch ist es möglich, dass Verstärkungsmittel auf die aus einem flexiblen Material bestehende Absperrklappen auf zu kleben.

Durch die Trennwände 26 wird verhindert, dass die Saatkörner beim Ablösevorgang und zu Beginn des Zurückfallvorganges in den Saatgutvorratsbereich 10 soweit seitlich abgelenkt werden können, dass sie die vereinzelten Saatkörner der benachbarten Perforationsreihen 4 berühren oder die Vereinzelung der Saatkörner der benachbarten Perforationsreihen 5 stören können.

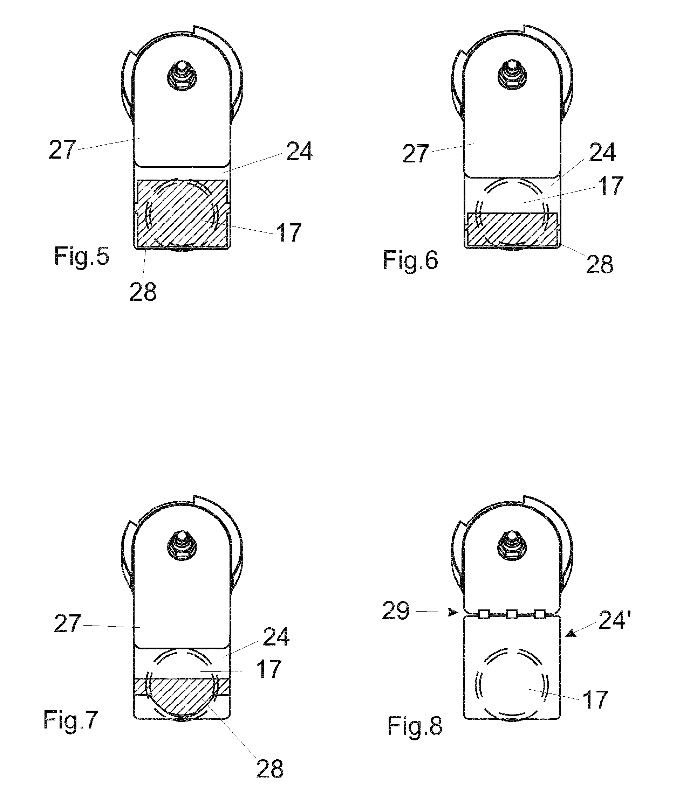

Die Klappe 24 gemäß Fig. 6 unterscheidet sich von der Klappe 24 gemäß Fig. 5 dadurch, dass der steifere Bereich 28 sich nur über einen Teilbereich der Eingangsöffnung 17, nämlich dessen unteren Bereich und im unteren Bereich der Klappe 24 erstreckt. Somit ist das Verstärkungsmaterial der Klappe 24 nur am Ende der Klappe 24 angeordnet.

Die Klappe 24 gemäß Fig. 7 unterscheidet sich von der Klappe 24 gemäß Fig. 6 dadurch, dass der steifere Bereich 28 sich ebenfalls nur über einen Teilbereich der Eingangsöffnung 17, nämlich dessen unteren Bereich erstreckt und im unteren Bereich der Klappe 24 sich befindet. Hierbei ist der Verstärkungsbereich im unteren Bereich an die Kontur der Eingangsöffnung 17 angepasst ausgebildet.

Die Absperrklappe 24' gemäß Fig. 8 ist mittels des Gelenkes 29 gegenüber der jeweiligen Eingangsöffnung 17 der jeweiligen Ausbringleitung beweglich angeordnet.

## Patentansprüche

**1.** Pneumatische Einzelkornsämaschine mit einem einen Saatgutvorratsbehälter aufweisenden Gehäuse und zumindest einer drehbar angetriebenen Vereinzelungstrommel, in deren Umfangsmantel kreisförmig in Perforationsreihen angeordnete Perforationen angebracht sind, einem Gebläse, mittels welchem eine Druckdifferenz zwischen dem Innenraum der Vereinzelungstrommel und dem Außenbereich der Vereinzelungstrommel erzeugbar ist, so dass, wenn die Vereinzelungstrommel durch den Saatgutvorrat geführt wird, sich an den Perforationen auf der Außenseite der perforierten Trommel Samenkörner anlagern, wobei das Gehäuse zwei voneinander beabstandete Seitenwände aufweist, die sich parallel zur Bewegungsrichtung der Trommel erstrecken und mit der Trommel zumindest annähernd abdichtend zusammenwirken, wobei eine die an die Perforationen angelegte Druckdifferenz zum Ablösen der Saatkörner von den Perforationen unterbrechende Abdeckeinrichtung im Innenraum der Trommel angeordnet ist, wobei im Bereich der Abdeckeinrichtung und den Perforationsreihen jeweils das eine Ende einer Ausbringleitung mit ihrer Einmündungsöffnung bis an die Trommeloberfläche zumindest annähernd heranreichend angeordnet ist, wobei die Einmündungsöffnungen der Ausbringleitungen und die zugeordneten Abdeckeinrichtungen im auf die Drehrichtung bezogenen aufsteigenden Rotationsbereich des Vereinzelungsbereiches der Trommel angeordnet sind, wobei zumindest einigen Ausbringleitungen durch motorisch Antriebsmittel betätigbare klappenartige Absperrmittel zugeordnet sind, wobei Absperrmittel im Bereich der Eingangsöffnungen der Ausbringleitungen angeordnet sind, **dadurch gekennzeichnet, dass** die Absperrmittel (24) als zumindest teilweise aus einem elastischen Material bestehende Absperrklappen (24) ausgebildet sind, dass die klappenartigen Absperrmittel (24) zumindest zwei verschiedene Steifigkeitsbereiche (27, 28) aufweisen, dass zumindest ein Teilbereich (28) des die Eingangsöffnung (17) abdeckenden Bereiches (28) des klappenartigen Absperrmittels (24) steifer als der übrige Bereich (27) des klappenartigen Absperrmittels (24) ausgebildet ist.

**2.** Einzelkornsämaschine nach Anspruch eins, **dadurch gekennzeichnet, dass** die Absperrklappen (24, 28) gegenüber den Eingangsöffnungen (17) der jeweiligen Ausbringleitung beweglich angeordnet sind.

**3.** Einzelkornsämaschine nach zumindest einem der vorstehenden Ansprüche, **dadurch gekennzeichnet, dass** der bewegliche Bereich (27) zwischen der Befestigungsstelle der Absperrklappen (24) an dem jeweiligen motorischen Antriebsmittel und dem Abdeckbereich der Absperrklappen (24) zur Abdeckung der Eingangsöffnungen (17) aus einem flexiblen Material bestehen.

**4.** Einzelkornsämaschine nach zumindest einem der Ansprüche 1 und 2, **dadurch gekennzeichnet, dass** der bewegliche Bereich zwischen der Befestigungsstelle der Absperrklappe (24) an dem motorischen Antriebsmittel und dem Abdeckbereich der Absperrklappe zur Abdeckung der Eingangsöffnung (17) als Gelenk (29) ausgebildet ist.

**5.** Einzelkornsämaschine nach einem oder mehreren der vorstehenden Ansprüche, **dadurch gekennzeichnet, dass** der steifere Bereich (28) durch ein Verstärkungsmaterial gebildet ist.

**6.** Einzelkornsämaschine nach einem oder mehreren der vorstehenden Ansprüche, **dadurch gekennzeichnet, dass** der steifere Bereich (28) der aus einem elastischen und/oder flexiblen Material bestehenden Absperrklappe (24) durch ein steifes Einlagematerial zumindest in einem Teilbereich des die Eingangsöffnung (17) abdeckenden Bereiches der Absperrklappen (24) gebildet ist.

**7.** Einzelkornsämaschine nach einem oder mehreren der vorstehenden Ansprüche, **dadurch gekennzeichnet, dass** das Einlagematerial eine Metalleinlage ist.

**8.** Einzelkornsämaschine nach einem oder mehreren der vorstehenden Ansprüche 1 bis 7, **dadurch gekennzeichnet dass** das Einlagematerial eine Gewebeeinlage ist.

**8.** Einzelkornsämaschine nach einem oder mehreren der vorstehenden Ansprüche 1 bis 5, **dadurch gekennzeichnet, dass** die aus einem Verstärkungsmaterial bestehenden Verstärkungsmittel auf die aus einem flexiblen Material bestehende Absperrklappen befestigt, insbesondere aufgeklebt ist.

**9.** Einzelkornsämaschine nach einem oder mehreren der vorstehenden Ansprüche, dass die Absperrmittel (24) die Eingangsöffnungen (17) zumindest annähernd luftdicht verschließen.
